# EUROPEAN PATENT APPLICATION

(11) **EP 4 369 259 A1**
(43) Date of publication of application: **15.05.2024**
(21) Application number: 22207260.5
(22) Date of filing: 14.11.2022
(51) Int. Cl.: G06N 5/022, G06F 16/36

(54) **METHOD OF UPDATING A KNOWLEDGE GRAPH**

(71) Applicant: Virtual Vehicle Research GmbH, 8010 Graz (AT)
(72) Inventor: Djokic Petrovic, Marija, 8010 Graz (AT); Kalayci, Tahir Emre, 8010 Graz (AT); Lah, Marko, 8010 Graz (AT); Fachbach, Bernd, 8010 Graz (AT)
(74) Representative: Dilg, Haeusler, Schindelmann Patentanwaltsgesellschaft mbH

(57) **Abstract**

The present invention relates to a computer-implemented method of updating a knowledge graph (110). The method comprises (i) providing the knowledge graph (110), wherein the knowledge graph (110) comprises representations (111) of a plurality of entities (113) related to a given subject domain and representations (112) of a plurality of relationships (114) between at least some of the entities (113); (ii) deriving from the knowledge graph (110) an ontology (120) comprising at least one of a concept and a relationship between concepts;(iii) receiving a rule (131) by means of a user interface (130), wherein the rule (131) links an antecedent (135) based on the ontology (120) to a consequent (136) based on the ontology (120); (iv) inferring, by means of a reasoning unit (140), information (143) from the rule (131); and (v) updating the knowledge graph (110) based on the information (143).

## Description

### Field of invention

The present invention relates to a computer-implemented method of updating a knowledge graph as well as a corresponding computer-readable storage medium and a corresponding data processing system.

### Art Background

Knowledge graphs are widely used in knowledge representation and reasoning for representing information about the world in a form that a computer system can use to solve complex tasks. They typically rely on a graph-structured data model or topology to integrate data and are often used to store interlinked descriptions of entities such as objects, events, situations or abstract concepts while also encoding the semantics underlying the used terminology. The graph-theoretical representation is in general more accessible and better understandable for a human user than other models generated by artificial intelligence.

Many of the big internet and social media companies have built large-scale knowledge graphs by extracting information from the internet or from online communities. For example, such knowledge graphs are used for answering complex user queries. However, updating these knowledge graphs in order to incorporate new information or to ensure adequate answers to new types of queries still constitutes a major challenge.

### Summary of the Invention

Hence, there may be a need to provide efficient updating mechanisms for knowledge graphs.

This objective is solved by a method of updating a knowledge graph, a computer-readable storage medium and a data processing system according to the independent claims.

According to an aspect of the present disclosure, a computer-implemented method of updating a knowledge graph is provided. The method comprises (i) providing the knowledge graph, wherein the knowledge graph comprises representations of a plurality of entities related to a given subject domain and representations of a plurality of relationships between at least some of the entities, (ii) deriving from the knowledge graph an ontology comprising at least one of a concept and a relationship between concepts, (iii) receiving a rule by means of a user interface, wherein the rule links an antecedent based on the ontology to a consequent based on the ontology, (iv) inferring, by means of a reasoning unit, information from the rule, and (v) updating the knowledge graph based on the information.

According to a further aspect of the present disclosure, a computer-readable storage medium is provided comprising instructions which, when executed by a computer, cause the computer to carry out the above method.

According to a further aspect of the present disclosure, a data processing system is provided. The data processing system comprises (i) a modelling unit comprising a knowledge graph, wherein the knowledge graph comprises representations of a plurality of entities related to a given subject domain and representations of a plurality of relationships between at least some of the entities, (ii) a conceptualization unit configured to derive from the knowledge graph an ontology comprising at least one of a concept and a relationship between concepts, (iii) a user interface configured to receive a rule, wherein the rule links an antecedent based on the ontology to a consequent based on the ontology, and (iv) a reasoning unit configured to infer information from the rule. The modelling unit is configured to update the knowledge graph based on the information.

In the context of the present disclosure, the term "knowledge graph" may particularly denote a model comprising representations of a plurality of entities related to a given subject domain and representations of a plurality of relationships between at least some of the entities. An entity may be or comprise at least one of an object, an event, a state, a concept, in particular an abstract concept, or an instantiation of a concept, i.e. an instance or individual. The knowledge graph may be configured to store interlinked descriptions of entities. The knowledge graph may be configured to encode the semantics underlying the used terminology.

The knowledge graph may include information that is at least partially representable in terms of a graph-structured model and/or a topology to integrate data. For example, at least some of the entities may be representable as nodes of a graph and at least some of the relationships may be representable as edges between at least some of the nodes. The knowledge graph may comprise a plurality of nodes, each node representing an entity related to the given subject domain, and a plurality of edges, each edge representing a relationship between entities. As an example, one node may represent the concept "steering wheel", another node may represent the concept "car", and a directed edge from the former to the latter node may represent the relationship "forms part of".

At least some of the nodes may be characterized by one or more properties. Similarly, at least some of the edges may be characterized by one or more properties. Thus, a property may refer to data attached to a certain node and/or a certain edge. The relevant properties may differ for at least some of the nodes and/or at least some of the edges.

In the context of the present disclosure, the term "ontology" may particularly refer to at least one of a concept and a relationship between concepts. Thus, the ontology may be a specification of a conceptualization. The ontology may be or comprise a data model. It may encompass a representation, a formal naming, and a definition of at least one of a category, a property, and a relation between concepts, data, and/or entities of the given subject domain. The ontology may represent characteristics of the subject domain and how they are related, e.g. by defining a set of concepts and categories that represent the subject domain at least partially. The ontology may be defined from subject domain knowledge. It may comprise definitions of a concept (TBox) and of its one or more relationships (ABox) for the given subject domain. It may comprise a hierarchy of concepts. The ontology may formally describe one or more taxonomies and/or one or more classification networks. The ontology may define a structure of some knowledge related to the given subject domain. It may define one or more terms or nouns representing classes of objects and one or more verbs representing relations between at least some of the objects.

A "concept" may denote an abstract and/or generic idea, which may be generalized from particular instances. A concept may be a linguistic representation of an abstract idea. An idea may refer to something that is conceived or is conceivable in the mind. The concept may form part of a hierarchy of conceptual levels, wherein higher or superordinate conceptual levels include concepts of increasing abstractness and/or generality. The concept may be instantiated by particular instances or individuals. A concept may be an entity represented in the knowledge graph. A relationship between concepts may be a relationship between entities represented in the knowledge graph.

In the context of the present disclosure, "deriving from the knowledge graph an ontology" may comprise deriving a pre-defined ontology, based on which the knowledge graph was provided, and/or deriving a novel ontology different from the pre-defined ontology. The derivation may be based on deductive and/or inductive inferences. A plurality of ontologies may be derived.

In the context of the present disclosure, the term "rule" may particularly denote a conditional statement linking an antecedent to a consequent. It may have the form of an implication between an antecedent and a consequent. In other words, a rule may denote an if-then statement. The antecedent may refer to one or more conditions that have to be fulfilled in order for the one or more consequences stated by the consequent to be realized. The antecedent may refer to the "if-clause", the consequent to the "then-clause" of the corresponding conditional sentence. In other words, the rule may mean that whenever the conditions specified in the antecedent hold, then the conditions specified in the consequent must also hold. Being entered by means of the user interface, the rule may be a user-defined rule. Antecedent and/or consequent may be based not only on the ontology, but also on other concepts and/or relationships between concepts, e.g. from a pre-defined ontology.

In the context of the present disclosure, "receiving a rule" may comprise receiving a plurality of rules each linking a respective antecedent to a respective consequent. At least some of the antecedents, in particular all of them, and/or at least some of the consequents, in particular all of them, may be based on the ontology.

In the context of the present disclosure, the term "information" may particularly denote knowledge inferred from the rule. Information may refer to facts and/or data. Information may refer to a description or representation of something that has objective reality and/or actual existence. Information may refer to something, e.g. an object, an event, or a state, that actually occurs or actually exists. It may refer to knowledge in digital form that is capable of being transmitted and processed. The information may be represented in a graph-theoretic manner, e.g. in terms of one or more nodes and/or of one or more edges. "Updating the knowledge graph based on the information" may include incorporating the information into the knowledge graph, in particular in a manner so that it is readily available to the user. "Updating" may refer to "extending" the knowledge graph in the sense that at least one of a new node, a new edge, and a new property is added to the graph, while in particular existing nodes are not changed. Additionally or alternatively, "updating" may refer to changing at least one of an existing node, an existing edge, and an existing property.

In the context of the present disclosure, the term "reasoning unit" may particularly refer to a unit configured to derive information which is not and/or not explicitly expressed in the knowledge graph. The information may be inferred by at least one of induction, deduction, abduction, and analogical reasoning. The information may be inferred based on the rule and/or the ontology. Alternatively or in addition, the information may be inferred based on the pre-defined rule and/or based on the predefined ontology.

In the context of the present disclosure, the term "user interface" may particularly denote a means by which a user and a computer system interact. The user interface may be a graphical user interface. The user interface may comprise at least one of an input device and an output device. The input device may be configured for entering information into the computer system, e.g. by a user. The output device may be configured for outputting information to the user. The output device may be a display. The input device may be configured for arranging graphical elements on the display. It may for example be a touchpad, a mouse, a joystick, or a smart glove. Alternatively or in addition, the input device may be configured for entering symbols such as text or numbers. The input device may be a keyboard or a microphone.

The "user" may be one or more humans interacting with the computer system, but it may also be a robot, a machine, or a further computer system. The user may be an ordinary user of the computer system or it may be an expert, for example a data engineer. A "data engineer" may be a person who is extracting, collecting, managing, analyzing, and/or converting data from various sources. The data engineer may be a data analyst or a data scientist. The data engineer may be one or more human beings, but may also be a machine, a robot or a computer system.

According to an exemplary embodiment, a computer-implemented method is provided that allows for interactive updating of the knowledge graph. In particular, entering a rule by means of the user interface allows for a highly flexible manner of updating the knowledge graph. Such a manner of updating the knowledge graph may be advantageous in comparison to update procedure which merely rely on crawling a knowledge source such as the internet, where information is encountered more or less by chance. By contrast, updating by means of a user interface allows for a more targeted and systematic updating of the knowledge graph. Thus, an advantage of the proposed method may be that the user interface enables a human-in-the-loop (HITL) model combining human expertise with the computational power of computer systems.

The update process may be particularly efficient because it is based on an ontology derived from the knowledge graph. This ontology is automatically generated from the knowledge graph. In this way, the update process may allow for integrating specific details lacking with respect to the semantics encoded in the knowledge graph. This may constitute a particularly advantageous update process integrating in a suitable manner machine and human contributions.

Additional embodiments of the computer-implemented method, of the computer-readable storage medium, and of the data processing system are described in the following.

According to an embodiment, the user interface is configured to graphically represent at least a part of the ontology in terms of a plurality of graphical elements and the rule is received by arranging the graphical elements with respect to each other. The plurality of graphical elements may consist of or comprise a plurality of blocks. They may be interlocking blocks comprising in particular a convex feature, e.g. a tab, and/or a concave feature, e.g. a hole. The convex and concave features of interlocking blocks may have complementary forms.

Arranging the graphical elements may comprise arranging them with respect to further graphical elements representing operators. The operators may be configured to interconnect the concepts and/or relationships between concepts represented by the graphical elements. Such operators may include at least one of "and", "or", "xor", "not", "smaller than", "larger than", "equal to", "if", "then", "true", "false", "set ... to" and "do". Alternatively or in addition, arranging the graphical elements may comprise arranging them with respect to further graphical elements representing numbers. Alternatively or in addition, there may be user-defined graphical elements to be entered by the user.

Such an embodiment may be advantageous because it may allow the user to enter rules in a very simple and fail-safe manner. Rules may be entered without requiring expert knowledge in specific programming languages, including the programming language or data base language in which the knowledge graph is stored. Instead, domain knowledge of the subject domain and knowledge of basic logic operators may be sufficient.

According to an embodiment, the user interface is or comprises a low-code editor. The low-code editor may employ block-based coding. The low-code editor may be based on a programming language, where the user issues instructions by dragging and dropping blocks. Such an editor may be useful to prevent syntax errors. Also, users may not have to know or memorize syntax to write rules. The low-code editor may be configured to enter rules using basic logical operators. The low-code editor may be configured to output code, in particular syntactically correct code, in a given programming language such as Python or PHP. It may also be configured to output code, in particular directly, in a declarative programming language such as Semantic Web Rule Language (SWRL).

According to an embodiment, the low-code editor may be a Blockly editor. Blockly is a library that adds a visual code editor to web and mobile applications. The Blockly editor may use interlocking, graphical blocks. The blocks may represent code concepts, in particular at least one of a variable, a logical expression, and a loop. The editor may be configured to output code, in particular syntactically correct code, in a given programming language such as Python or PHP.

According to an embodiment, receiving the rule by means of the user interface comprises translating the arrangement of graphical elements into an output code in a given programming language such as Python or PHP.

According to an embodiment, inferring the information comprises translating the arrangement of the graphical elements into respective instructions of a declarative programming language. In the context of the present disclosure, a "declarative programming language" may be configured to express a logic of a computation, in particular without describing a control flow of the computation. The control flow may be the order in which individual statements, instructions or function calls are executed or evaluated. In a declarative programming language, this order may not be explicit. Such an embodiment may be advantageous because declarative programming languages may expose the logical structure of rules, e.g. in terms of entities and relationships between entities. This logical structure may provide hints how to adequately integrate information from the rule into the knowledge graph.

According to an embodiment, the declarative programming language is Semantic Web Rule Language (SWRL). Accordingly, the received rule may be a user-defined SWRL rule generated from a model created in Blockly. Semantic Web Rule Language may be an expressive OWL-based rule language. SWRL may allow users to write rules that can be expressed in terms of OWL concepts. This may be useful to provide more powerful deductive reasoning capabilities than OWL alone. Semantically, SWRL may be built on the same description logic foundation as OWL and may provide similarly strong formal guarantees when performing inference. Semantic Web Rule Language may be configured to express rules as well as logic, e.g. by combining OWL with a subset of the Rule Markup Language, itself a subset of Datalog. Because SWRL may be expressible in human-readable syntax, it may be especially suitable for knowledge representation that is at least to some extent accessible to humans. For the same reason, the arranged graphical elements of the user interface may be easily translatable into SWRL.

According to an embodiment, the information is inferred using a knowledge representation language, in particular Web Ontology Language (OWL). The knowledge representation language may be configured to formulate ontologies. The knowledge representation language may be configured to implement at least one of creating classes, creating properties, defining instances, and applying operators. An "instance" may be an object. A "class" may be a collection of objects. A class may contain instances of the class. A class may be a subclass of another, inheriting characteristics from its parent superclass. A class of classes may form a "metaclass". A "property" may be a characteristic of a class, in particular a directed binary relation that specifies some attribute which is true for instances of that class. Properties may exhibit logical features, for example, by being at least one of transitive, symmetric, inverse and functional. An "operator" may be at least one of union, intersection, complement, class enumeration, cardinality, disjointness, and equivalence.

Such an embodiment may be advantageous because the syntax and structure of knowledge representation languages such as OWL may be particularly useful for representing ontologies and/or rules as well as for reasoning on these.

According to an embodiment, the reasoning unit infers information based on the knowledge representation language. The reasoning unit may be configured to check the consistency of an ontology and/or to derive new information from the ontology. It may be configured to carry out at least one of assigning instances or individuals to new classes, assigning classes to new super-classes, and finding new relationships between instances or individuals.

The reasoning unit may be based on OWL. It may be a Pellet OWL reasoner, i.e. a free open-source Java-based reasoner for OWL 2 and SWRL. It may support the full expressivity of SROIQ Description Logic, user-defined datatypes and DL-safe rules. Pellet may use a tableau-based decision procedure to provide many reasoning services along with the capability to generate explanations for the inferences it computes.

According to an embodiment, the information regards an instance at least partially instantiating the ontology. The instance may be a concrete object, state or event, e.g. belonging to the given subject domain. The instance may correspond to an individual according to description logic. The instance may instantiate a class and/or a concept. It may instantiate a relationship between classes and/or a relationship between concepts. The instance, e.g. object, state or event, may form part of an environment with which a user is interacting supported by information derived from the knowledge graph. Information regarding instances may be particularly useful in specific applications of the knowledge graph, which generally involve concrete objects, events or states realizing at least a part of the ontology.

According to an embodiment, the knowledge graph is provided based on a predefined ontology comprising at least one of a predefined concept and a predefined relationship between predefined concepts, in particular based on a plurality of predefined ontologies. The predefined ontology may have, but need not have some or all of the above-described characteristics of the ontology. The predefined ontology may be fixed, i.e. may not be altered during the updating. Alternatively, the predefined ontology may also be amended during the updating. The predefined ontology may be provided by an expert such as a data engineer. Predefined ontologies, which may be related to the given subject domain, may facilitate the construction of the knowledge graph. They may be adapted to specific applications or use cases of the knowledge graph.

According to an embodiment, the knowledge graph is provided based on a predefined rule linking a predefined antecedent based on the predefined ontology with a predefined consequent based on the predefined ontology, in particular based on a plurality of predefined rules. The predefined rule may, but need not have some or all of the above-described characteristics of the rule. The predefined rule may be fixed, i.e. may not be altered during the updating. Alternatively, the predefined rule may also be amended during the updating. The predefined rule may be provided by an expert such as a data engineer. Predefined rules, which may be related to the given subject domain, may facilitate the construction of the knowledge graph. They may be adapted to specific applications or use cases of the knowledge graph.

According to an embodiment, the information is inferred from the rule based on at least one of the ontology, the predefined ontology, and the predefined rule. This may allow inferring a wider range of information compared with inferring information exclusively from the rule. In particular, information may be inferred, which cannot be inferred based only on the rule.

According to an embodiment, the antecedent of the rule and/or the consequent of the rule may be based on at least one of the predefined ontology and the predefined rule, i.e. in addition to being based on the ontology. This may allow more flexibility for entering or receiving the rule.

According to an embodiment, the method further comprises (i) inferring further information from the predefined rule, in particular only from the predefined rule, and (ii) updating the knowledge graph based on the further information, in particular in real time. It may be inferred from a plurality of predefined rules. The further information may be inferred based on at least one of the predefined ontology, the ontology, and a further ontology derived from the knowledge graph. Such additional updating of the knowledge graph may allow for automated reasoning, in particular in real time, as it does not require an interaction via the user interface.

According to an embodiment, the method further comprises (i) receiving data related to the represented entities from at least one data source, in particular a sensor, and (ii) integrating at least part of the received data into the knowledge graph. Data may be received from a plurality of data sources, in particular from a plurality of sensors. The sensor may be at least one of a visual sensor, an audio sensor, a motion sensor, a tactile sensor, a weight sensor, an eye tracking sensor, a body sensor, a head rotation sensor, and a field view sensor. At least one of the sensors, in particular all of them, may be attached to the user and/or interacted with by the user.

For example, the given subject domain may regard gesture recognition, e.g. of a worker at her/his workplace. Then, the sensors may include a visual sensor and an audio sensor, e.g. for capturing the environment and/or the user. The sensors may also include a motion sensor for detecting hand gestures. The motion sensor may comprise one or more Hall sensors at the top or tip of one or more fingers as well as a magnet located for example at the palm or back of the hand. A Hall sensor is a sensor detecting and/or measuring magnetic fields based on the Hall effect.

As another example, the given subject domain may regard worker support. Then, the sensors may include a visual sensor and an audio sensor, e.g. for capturing the environment and/or the user. The sensors may further include a tactile sensor and/or a weight sensor, in particular for determining attentiveness, fatigue or guidance.

As another example, the given subject domain may regard situational awareness with smart glasses. Then, the sensors may include an eye tracking sensor, a body sensor, a head rotation sensor and a field view sensor, e.g. to determine, based on the knowledge graph, situational information to be displayed by the smart glasses.

According to an embodiment, the method further comprises (i) outputting a feedback based on the received data and the knowledge graph, wherein in particular the feedback comprises at least one of a sound, a text message, an image, a diagram, and an animation. The feedback may be or comprise a signal. The feedback may be outputted by a corresponding feedback device. Such feedback may be useful as guidance to the user.

If the given subject domain regards gesture recognition, the feedback may include at least one of a light, a sound, and a visual feedback, in particular through a worktable, as well as content on a screen, in particular a smart touch screen. The screen may be attached to the worktable. The feedback may be based on the inferred information or other real-time reasoning results.

If the given subject domain regards worker support, the feedback may include at least one of an illumination, e.g. of the worktable, a warning sound, and an order, e.g. an acoustic order, in particular in case of a dangerous situation. The feedback may be based on the inferred information or other real-time reasoning results. The feedback may be based on an inference, which action by the worker is required in the current situation.

If the given subject domain regards situational awareness with smart glasses, the feedback may include a computer-generated or retrieved information displayed in the smart glasses. It may include additional signals. The feedback may be based on the inferred information or other real-time reasoning results.

According to an embodiment, the at least one data source, in particular the at least one sensor, provides data regarding a user interacting with an environment, which is related to the given subject domain, and the outputted feedback is configured to guide the user's interaction with the environment, in particular in real time. The updating procedure of the knowledge graph may be particularly useful for such applications as it allows to directly integrate into the knowledge graph additional knowledge based on observations and experience regarding the user's interaction with the environment.

Some embodiments have been described with reference to apparatus type claims whereas other embodiments have been described with reference to method type claims. However, a person skilled in the art will gather from the above and the following description that, unless otherwise indicated, any combination of features relating to method type claims and of features relating to apparatus type claims, is disclosed with this document.

The aspects defined above and further aspects of the present invention are apparent from the examples of embodiment to be described hereinafter and are explained with reference to the examples of embodiment.

### Brief Description of the Drawings

Fig. 1 shows a block diagram illustrating a method of updating a knowledge graph according to an exemplary embodiment of the invention.
Figs. 2 to 4 show various applications of respective knowledge graphs to guide a user's interaction with different environments according to exemplary embodiments of the invention.
Fig. 5 shows different components of a data processing system for updating a knowledge graph according to an exemplary embodiment of the invention.
Fig. 6 shows a block diagram illustrating ontology derivation from a knowledge graph according to an exemplary embodiment of the invention.
Fig. 7 shows a user interface for entering a user-defined rule according to an exemplary embodiment of the invention.
Fig. 8 illustrates an updating procedure of a knowledge graph based on the user-defined rule of Figure 7.

### Detailed Description of Exemplary Embodiments

The illustrations in the drawings are schematic. In different drawings, similar or identical elements are provided with the same reference signs. For the sake of clarity and comprehensibility, reference signs are sometimes omitted for those features, for which reference signs have already been provided in earlier figures.

Before, referring to the drawings, exemplary embodiments will be described in further detail, some basic considerations are summarized in the following based on which exemplary embodiments of the invention have been developed.

According to an exemplary embodiment, the method of updating the knowledge graph includes automatic ontologies acquisition from the knowledge graph, creating user-defined rules using a low-code editor and performing a real-time reasoning process over (1) pre-defined ontologies and pre-defined rules provided by a data engineer, (2) automatically generated ontologies, and (3) user-defined rules, to derive new relationships and to manifest them into the knowledge graph and/or to present them to the user. Thus, the approach may include a human-in-the-loop (HITL) model, which covers the presence of a user and a data engineer. The output result of the reasoning process, i.e. new facts or information, may be used to dynamically enrich the knowledge graph and present to the user (through certain devices) and data engineer.

According to an exemplary embodiment, the method includes at least one of the following: (i) a user generating/providing data to the knowledge graph with different tools, devices, and sensors; (ii) a data engineer creating predefined ontologies and rules, which are stored in the knowledge graph; (iii) an ontology acquisition process generating new ontologies from the knowledge graph; (iv) concepts derived from ontologies and used to define elements in low-code editor; (v) the data engineer creating user-defined rules with low-code editor; (vi) a reasoning process over pre-defined ontologies, pre-defined and user-defined rules to infer new facts that are stored in the knowledge graph and which can be shown to the data engineer and/or user.

According to an exemplary embodiment, a knowledge graph is provided. Sensors are used to collect data from an environment and these data are stored and integrated in the knowledge graph. These sensors are either attached to a user or interacted by a user. Ontologies are either provided by a data engineer as predefined ontologies and/or automatically generated from the knowledge graph. Rules are either provided by a data engineer as predefined rules and/or defined via a low-code editor. A reasoning process is either triggered by a data engineer or with some scheduled tasks. Utilization of the low-code editor may be an optional element and the reasoning process can be executed only by using pre-defined rules. Furthermore, the input pipeline may require at least one sensor to provide the data. Also, the output pipeline may require at least one device to present the results to the user. The user could be a human or a machine such as a robot, a computer, etc.

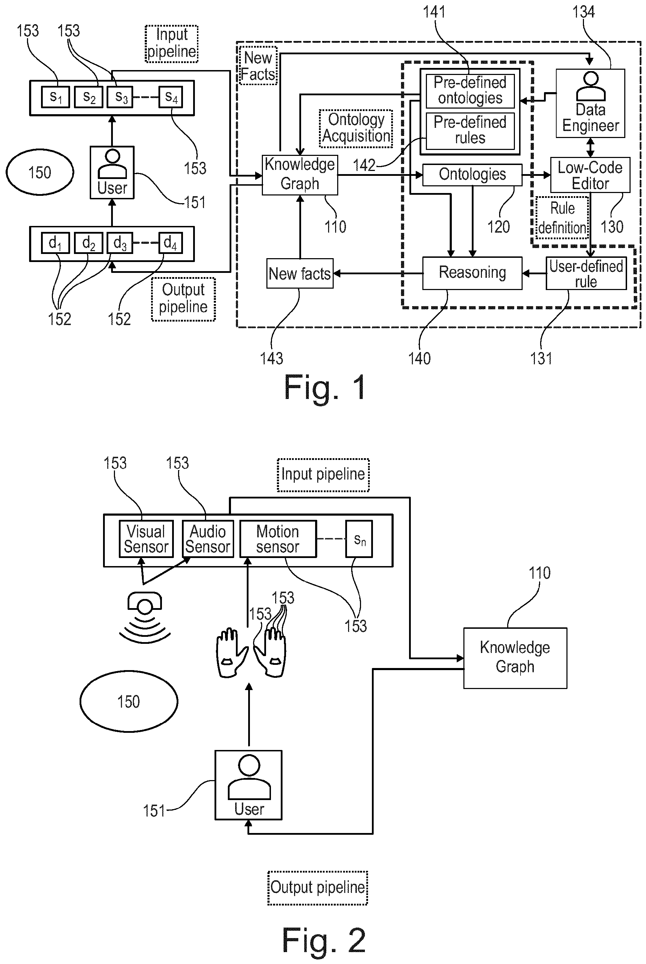

**Figure 1** shows a block diagram illustrating a computer-implemented method of updating a knowledge graph 110. The method comprises (i) providing the knowledge graph 110, wherein the knowledge graph 110 is a model comprising representations of a plurality of entities related to a given subject domain and representations of a plurality of relationships between at least some of the entities; (ii) deriving from the knowledge graph 110 an ontology 120 comprising at least one of a concept and a relationship between concepts; (iii) receiving a rule 131 by means of a user interface 130, wherein the rule 131 links an antecedent based on the ontology 120 to a consequent based on the ontology 120; (iv) inferring, by means of a reasoning unit 140, information 143 from the rule 131; and (v) updating the knowledge graph 110 based on the information 143.

The knowledge graph 110 is provided based on predefined ontologies 141 and predefined rules 142, which have all been predefined by a data engineer 134. The predefined ontologies 141 and predefined rules 142 may also be used by the reasoning unit 140 for inferring new information 143 or new facts to update the knowledge graph 140. The one or more ontologies 120 derived from the knowledge graph 110 may directly be used by the reasoning unit 140 for inferring new information 143.

The user interface 130 is a low-code editor, which is employed by the data engineer 134 for rule definition and in particular for entering the user-defined rule 131. When entering rules by means of the low-code editor 130, the data engineer 134 may consult the knowledge graph 134 and use information from the knowledge graph 134 for defining the rule 131.

As illustrated on the left-hand side of Figure 1 outside the outer dashed box, the knowledge graph 110 can be applied for guiding a user 151 interacting with an environment 150. Via an output pipeline, information from the knowledge graph 110 can be used to control the feedback 152, e.g. various signals, of one or more feedback devices to the user 151. This feedback 152 supports the user 151 when interacting with the environment 150. Furthermore, one or more data sources 153 such as sensors provide information regarding the user 151 and/or the environment 150 via an input pipeline to the knowledge graph 110. The knowledge graph 110 may or may not be updated based on this information.

**Figure 2** shows an application of a knowledge graph 110 to guide a user's 151 interaction with an environment 150, thus further illustrating the region outside the outer dashed box of Figure 1. The application regards gesture recognition, a technology that uses sensors to read and interpret hand movements as commands. In this application, the user 151, e.g. a worker, wears smart gloves to track the user's 151 hand or hands over a smart and/or illuminated worktable in an environment 150, which in this case is a factory area. The one or more smart gloves each include one or more motion sensors 153, e.g. in the form of Hall sensors at the tip of each finger in combination with a strong magnet at the palm or backside of the respective hand. Additional sensors 153, e.g. a visual sensor and an audio sensor, also track the hand or hands as well as objects over the smart and/or illuminated worktable. The movements of the worker's 151 hands and/or of objects that the worker 151 is using are detected for further analysis or for providing feedback to the worker. As feedback, the user 151 can be notified with lights, sounds or visual feedbacks through the worktable and/or through a (smart touch) screen that is attached to the worktable based on the reasoning results.

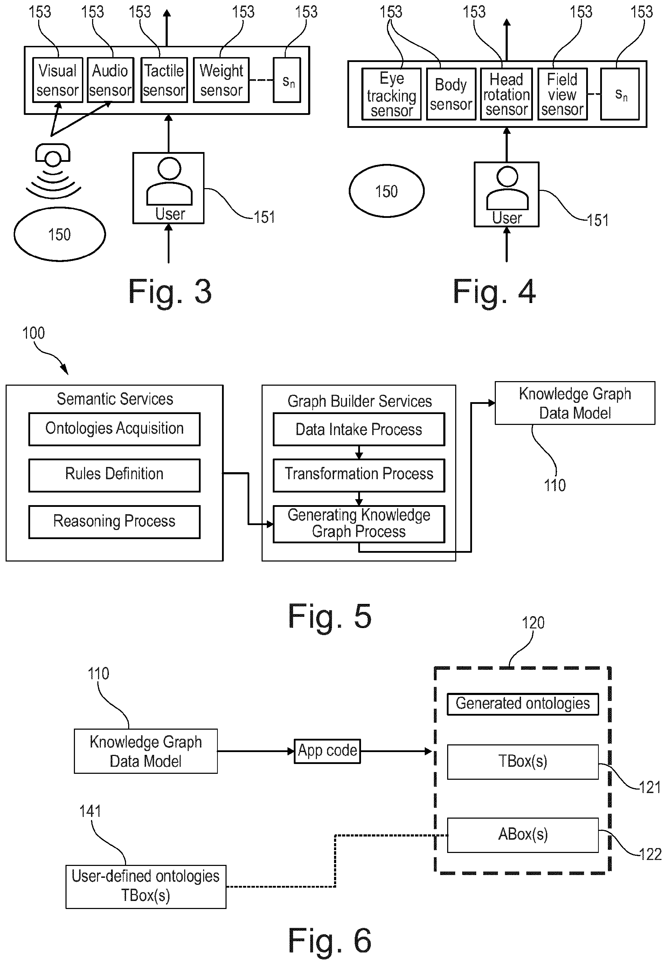

**Figure 3** shows an application of a knowledge graph 110 to guide a user's 151 interaction with an environment 150, thus further illustrating the region outside the outer dashed box of Figure 1. The application regards data driven worker support. In this application, tactile and weight sensors 153 are used together with an audiovisual sensor 153 (camera) to support the user 151, e.g. a worker, for cases such as attentiveness, fatigue or guidance. Data collected from these different sensors 153 can be used to check the status of the worker 151 or dangerous situations to support or guide the worker 151 when needed. Thus, feedback may support or guide the worker 151 with illuminating the worktable, warning sounds, and eventually giving orders in case of dangerous situations, if necessary, based on the result of the reasoning that is performed to infer the needed action according to the worker's 151 state.

**Figure 4** shows an application of a knowledge graph 110 to guide a user's 151 interaction with an environment 150, thus further illustrating the region outside the outer dashed box of Figure 1. The application regards situational awareness with smart glasses. In this application, the user 151, e.g. a worker, wears smart glasses, which display computer-generated information in front of the worker's 151 eyes. Data is collected from an eye tracking sensor 153, a body sensor 153, a head rotation sensor 153 and a field view sensor 153 and may be fused with operational data retrieved from different sources such as machines, robots, enterprise resource planning (ERP), etc. Smart glasses allow for hands-free viewing of in-situ information making it possible to receive information while carrying out simple tasks. Also, real-time user guidance is possible, e.g. to indicate the precise part of the item to be manipulated. Enriched content can be used, e.g. images, 2D diagrams, 3D objects, QR-code reading, animation, etc. Furthermore, it is possible to access and store memories, such as for recording or displaying a movie or a screenshot of the scene. The feedback or output to the user 151 includes, for example, computer-generated or retrieved information directly displayed in the smart glasses or additional feedback based on the result of the reasoning that is performed to infer situational awareness.

**Figure 5** shows different components of a data processing system 100, e.g. an explore data context hub, for updating a knowledge graph 110. The overall goal is semantic reasoning over the knowledge graph 110 in real time. The methodology components include semantic services, graph builder services and the knowledge graph data model 110. The result of the methodology includes enrichment of the knowledge graph 110 with new facts or information as well as the presentation of new facts or information to the customers or users.

Semantic services include (i) ontologies acquisition, e.g. generating ontologies from the knowledge graph data model 110 applying entity relationship extraction and gathering user-defined ontologies, (ii) rules definition,
e.g. generating the Semantic Web Rule (SRWL) from a model created in a Low-Code/UI Editor (Blockly), and (iii) a reasoning process, e.g. running an OWL reasoner (Pellet) over rules (pre-defined and user-defined) and ontologies in aim to get new facts (inferred knowledge or information).

Graph builder services include (i) a data intake process, e.g. a step dealing with the retrieval of the data from other and external data sources, (ii) a transformation process, e.g. a step transforming the data and/or some preprocessing to prepare data for the knowledge graph 110, and (iii) a process generating the knowledge graph 110, e.g. a step generating the knowledge graph 110 from the data retrieved and prepared in previous steps. The semantic services contribute to the process of generating the knowledge graph 110, which process eventually yields the knowledge graph data model 110.

The knowledge graph data model 110 contains all the data in two data sources, namely a relational database and a graph database, e.g. using Neo4j. A fixed schema is used for the relational database. A dynamic schema is used for the graph database.

**Figure 6** shows a block diagram illustrating ontology derivation or generation from a knowledge graph 110 by means of specific app code. The generated ontology 120 includes TBox statements 121 and/or ABox statements 122. In addition, ABox statements 122 may be based on user-defined ontologies 141, which may correspond to or include TBox statements 121.

In the context of the present disclosure, a TBox statement 121 or "terminology component" may particularly denote a set of definitions and specializations. It may describe a domain of interest or given subject domain by defining classes and properties as a domain vocabulary. TBox statements 121 may be the set of all the constraints on the possible models.

In the context of the present disclosure, an ABox statement 122 or "assertion component" may particularly denote a world description. It may be a fact associated with the TBox's conceptual model. It may introduce instances or individuals, e.g. by giving them names, and/or assert properties about instances.

Let us consider an example of ontology acquisition. Based on a knowledge graph that includes entities "order" and "employee", a "goodorder" ontology may be derived by a reasoning unit, e.g. based on an OWL reasoner like Pellet. On the level of TBox statements 121, classes can be defined such as "employee", "order" or "orderdetail". Furthermore, properties can be defined such as "title", "discount" or "hasorder". These properties may refer to a single entity, e.g. "employeeID", or to more than one entity, e.g. "hasorder". Instances or individuals may then be instantiations or realizations of the different classes or properties, e.g. employee1 or order1. On the level of ABox statements 122, facts may be asserted about specific instances, e.g. "employee1 has order1".

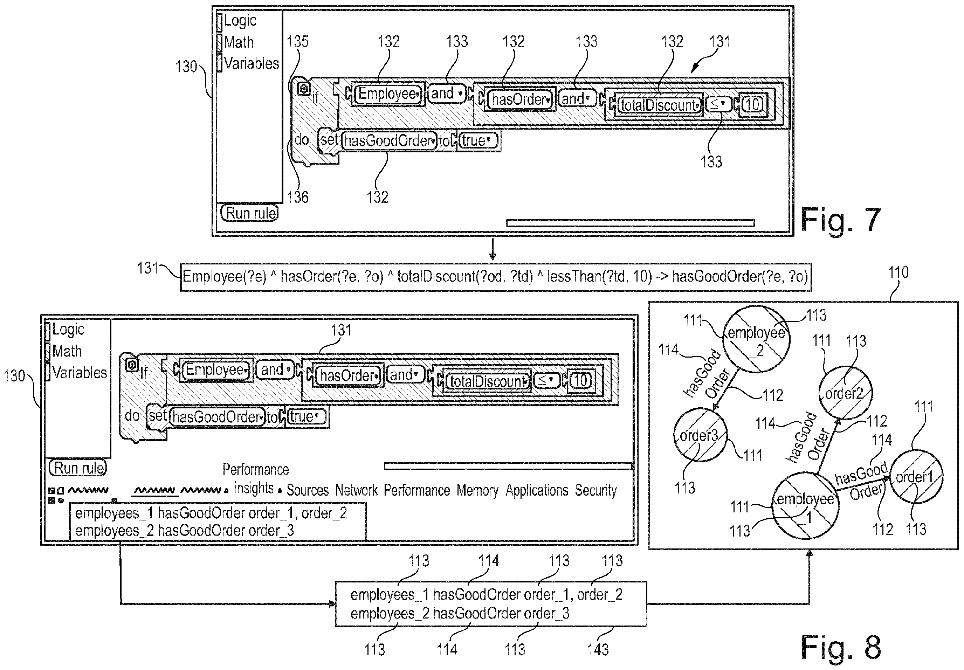

**Figure 7** shows a user interface 130 for entering a user-defined rule 131. The user interface 130 includes a low-code editor, e.g. based on Blockly. The user-defined rule 131 is represented by means of blocks 132 e.g. labeled as "employee", "hasOrder", "totalDiscount", or "hasGoodOrder". The blocks 132 are connected by operators 133, e.g. labeled as "and", "≤" or "true". Further graphical elements include numbers and instructions such as "set ... to". The rule 131 has an antecedent clause 135 preceded by "if" and a consequent clause 136 preceded by "do". The rule 131 is entered by arranging the blocks, operators and further graphical elements. To this purpose, the blocks have concave and convex elements as in puzzle pieces.

In the illustrated example, the entered rule in the low-code editor reads "If Employee and hasOrder and totalDiscount ≤ 10 do set hasGoodOrder to true". The entered rule is then transformed into SWRL code as shown in the box in the lower part of Figure 7. It may first be output as Python code by the low-code editor 130 and then be transformed to SWRL code by respective App code.

**Figure 8** illustrates an updating procedure of a knowledge graph 110 based on the user-defined rule 131 of Figure 7. New information 143 is derived from the rule 131 entered by means of the user interface 130. In this case, the rule 131 formulated in terms of general concepts is applied to specific instances, here "employee1", "employee2", "order1", "order2", and "order3", to yield new information 143. Specifically, the new information 143 inferred by means of a reasoning unit is that "employee1 hasGoodOrder order1", "employee1 hasGoodOrder order2", and "employee2 hasGoodOrder order3".

As shown in the box on the upper right-hand side of Figure 8, the new information 143 can be transformed in a graph-theoretical representation comprising nodes 111 and edges 112. In this case, each node 111 represents an entity 113 referring to a specific instance such as "employee1" or "order3", and each edge 112 represents a relationship 114 between entities such as "hasGoodOrder". On the basis of this graph-theoretical representation, the knowledge graph 110 can be updated.

It should be noted that the term "comprising" does not exclude other elements or steps and the use of articles "a" or "an" does not exclude a plurality. Also, elements described for different embodiments may be combined. It should also be noted that reference signs in the claims should not be construed as limiting the scope of the claims.

### List of reference signs:

- 100: data processing system
- 110: knowledge graph
- 111: node
- 112: edge
- 113: entity
- 114: relationship between entities
- 120: ontology
- 121: TBox statement
- 122: ABox statement
- 130: user interface
- 131: user-defined rule
- 132: block
- 133: operator
- 134: data engineer
- 135: antecedent
- 136: consequent
- 140: reasoning unit
- 141: predefined ontology
- 142: predefined rule
- 143: information
- 150: environment
- 151: user
- 152: feedback
- 153: data source

## Claims

1. A computer-implemented method of updating a knowledge graph (110), the method comprising
providing the knowledge graph (110), wherein the knowledge graph (110) comprises representations (111) of a plurality of entities (113) related to a given subject domain and representations (112) of a plurality of relationships (114) between at least some of the entities (113);
deriving from the knowledge graph (110) an ontology (120) comprising at least one of a concept and a relationship between concepts;
receiving a rule (131) by means of a user interface (130), wherein the rule (131) links an antecedent (135) based on the ontology (120) to a consequent (136) based on the ontology (120);
inferring, by means of a reasoning unit (140), information (143) from the rule (131); and
updating the knowledge graph (110) based on the information (143).

2. The method of claim 1, wherein the user interface (130) is configured to graphically represent at least a part of the ontology (120) in terms of a plurality of graphical elements (132), in particular a plurality of blocks, and wherein the rule (131) is received by arranging the graphical elements (132) with respect to each other.

3. The method of claim 2, wherein inferring the information (143) comprises translating the arrangement of the graphical elements (132) into respective instructions of a declarative programming language.

4. The method of claim 3, wherein the declarative programming language is Semantic Web Rule Language (SWRL).

5. The method of any of claims 1 to 4, wherein the information (143) is inferred using a knowledge representation language, in particular Web Ontology Language (OWL).

6. The method of any of claims 1 to 5, wherein the information (143) regards an instance at least partially instantiating the ontology (120).

7. The method of any of claims 1 to 6, wherein the knowledge graph (110) is provided based on a predefined ontology (141) comprising at least one of a predefined concept and a predefined relationship between predefined concepts.

8. The method of claim 7, wherein the knowledge graph (110) is provided based on a predefined rule (142) linking a predefined antecedent based on the predefined ontology (141) with a predefined consequent based on the predefined ontology (141).

9. The method of claims 7 or 8, wherein the information (143) is inferred from the rule (131) based on at least one of the ontology (120), the predefined ontology (141), and the predefined rule (142).

10. The method of claims 8 or 9, further comprising
inferring further information from the predefined rule (142); and
updating the knowledge graph (110) based on the further information.

11. The method of any of claims 1 to 10, further comprising
receiving data related to the represented entities (113) from at least one data source (153), in particular a sensor; and
integrating at least part of the received data into the knowledge graph (110).

12. The method of claim 11, further comprising
outputting a feedback (152) based on the received data and the knowledge graph (110), wherein in particular the feedback (152) comprises at least one of a sound, a text message, an image, a diagram, and an animation.

13. The method of claim 12, wherein the at least one data source (153) provides data regarding a user (151) interacting with an environment (150), which is related to the given subject domain, and wherein the outputted feedback (152) is configured to guide the user's interaction with the environment (150), in particular in real time.

14. A computer-readable storage medium comprising instructions which, when executed by a computer, cause the computer to carry out the method of any of claims 1 to 13.

15. A data processing system (100) comprising
a modelling unit comprising a knowledge graph (110), wherein the knowledge graph (110) comprises representations (111) of a plurality of entities (113) related to a given subject domain and representations (112) of a plurality of relationships (114) between at least some of the entities (113);
a conceptualization unit configured to derive from the knowledge graph (110) an ontology (120) comprising at least one of a concept and a relationship between concepts;
a user interface (130) configured to receive a rule (131), wherein the rule (131) links an antecedent (135) based on the ontology (120) to a consequent (136) based on the ontology (120); and
a reasoning unit (140) configured to infer information (143) from the rule (131),
wherein the modelling unit is configured to update the knowledge graph (110) based on the information (143).
